(19) Europäisches Patentamt / European Patent Office / Office européen des brevets

(11) **EP 4 411 317 A1**

(12) **EUROPEAN PATENT APPLICATION**
published in accordance with Art. 153(4) EPC

(43) Date of publication:
**07.08.2024 Bulletin 2024/32**

(21) Application number: **22872622.0**

(22) Date of filing: **22.08.2022**

(51) International Patent Classification (IPC):
*G01B 11/30* *(2006.01)* *G01B 11/22* *(2006.01)*

(52) Cooperative Patent Classification (CPC):
**G01B 11/22; G01B 11/30**

(86) International application number:
**PCT/JP2022/031600**

(87) International publication number:
**WO 2023/047866 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021156463**

(71) Applicant: **Toray Industries, Inc.**
**Tokyo 103-8666 (JP)**

(72) Inventors:
• **OISHI, Shota**
**Otsu-shi, Shiga 520-8558 (JP)**
• **SUGIHARA, Hiroki**
**Otsu-shi, Shiga 520-8558 (JP)**
• **TAKEMOTO, Kyoya**
**Otsu-shi, Shiga 520-8558 (JP)**
• **HAYASHI, Shohei**
**Otsu-shi, Shiga 520-8558 (JP)**

(74) Representative: **Hoefer & Partner Patentanwälte mbB**
**Pilgersheimer Straße 20**
**81543 München (DE)**

(54) **SHEET-LIKE MATERIAL UNEVENNESS MEASURING DEVICE, AND SHEET-LIKE MATERIAL UNEVENNESS MEASURING METHOD**

(57) An unevenness measuring device for a sheet-shaped material of the present invention is a device for measuring the depth of a local recessed portion and/or a height of a local projecting portion of a sheet-shaped material being conveyed, using a surface of the sheet-shaped material held on a roller as a measurement target. The device includes: a light irradiation unit configured to irradiate the measurement target with illumination light, the measurement target being a surface on an opposite side to a portion that is in contact with the roller in the sheet-shaped material held on the roller; a time-delay integration type imaging unit arranged to face the light irradiation unit and configured to receive the illumination light from the light irradiation unit; a luminance-profile calculation unit configured to calculate a luminance profile in a main-scanning direction from a captured image generated by the imaging unit; an unevenness determination unit configured to determine, based on the luminance profile, whether the sheet-shaped material has a recessed portion and/or a projecting portion; and an unevenness calculation unit configured to estimate, based on the luminance profile, a depth of the recessed portion and/or a height of the projecting portion.

FIG.1

**Description**

Field

The present invention relates to an unevenness measuring method for a sheet-shaped material, and an unevenness measuring device for a sheet-shaped material capable of implementing the unevenness measuring method.
Background
Conventionally, for the purpose of inspecting the presence or absence of defects such as unevenness and flaws in sheet-shaped materials such as films, fiber bundles, and steel plates, offered has been an inspection device that emits light from a light-emitting unit onto the surface of an inspected object, receives transmitted light or reflected light from the inspected object with an imaging unit, and performs surface inspection of the inspected object by image signals from the imaging unit. The defects such as unevenness and flaws are discovered by inspection using defect inspection equipment during the manufacturing process and before product shipment, which leads to quality assurance and process improvements.
In recent years, however, quality requirements for sheet-shaped materials such as films, fiber bundles, and steel sheets have become increasingly stringent and, even if the intensity of defects is at a very small level, it has been desired to control and guarantee even the height of unevenness and the size of flaws and the like of the defects.
Examples of methods for measuring the unevenness of an inspected object include a light-section method and a transmissive-dimension measuring method. As a light-section method, it has been offered to detect surface defects such as dents and flaws on the surface of a steel plate, in a production line for steel plates and the like, by irradiating the surface of the steel plate with linear laser light, imaging the surface of the steel plate with a delay-integration type camera, and outputting light-section images (see Patent Literature 1, for example). As a transmissive-dimension measuring method, it has been offered to measure various dimensions of an inspected object by receiving changes in the quantity of light using an imaging unit when the inspected object intercepts an irradiation light from a light-emitting unit (see Patent Literature 2 to 4, for example).

Citation List

Patent Literature

[Patent Literature 1] Japanese Patent Application Laid-open No. 2017-187348
[Patent Literature 2] Japanese Patent Application Laid-open No. 2010-286244
[Patent Literature 3] Japanese Patent Application Laid-open No. 2008-51733
[Patent Literature 4] Japanese Patent Application Laid-open No. H11-201739

Summary

Technical Problem

However, with the technologies disclosed in the above-described Patent Literature 1 to 4, it has been difficult to inspect minute unevenness and measure the height thereof that resides in sheet-shaped materials such as films and fiber bundles manufactured in high-speed conveyance processes.
Specifically, the light-section method disclosed in Patent Literature 1 measures the height of unevenness by detecting reflected light from the outermost surface of sheet-shaped materials such as films, fiber bundles, and steel plates. Unevenness can be detected when the reflectance of the sheet-shaped material is high, but when the reflectance of the sheet-shaped material is low or depending on the structure thereof, it is difficult to detect unevenness as the light is transmitted into the inside of the sheet-shaped material and scattered light is detected, which leads to deterioration in accuracy of height measurement.
The transmissive measuring methods disclosed in Patent Literature 2 to 4 measure the height of unevenness by receiving changes in the quantity of shading light of the light irradiated onto the surface of sheet-shaped materials such as films, fiber bundles, and steel plates using an area camera, but such measurement has been difficult in high-speed conveyance processes. The data transfer rate when, in a high-speed conveyance process that exceeds 200 m/min, a monochrome image having 4096 × 64 pixels is captured at 8 bits and 50 kHz or higher is calculated as follows.

$$8 \ [\text{bit}] \times 4096 \times 64 \times 50 \ [\text{kHz}] = 105 \ [\text{Gbps}]$$

The industrial image processing standard CoaXPress has an output limit of 25 Gbps and the current latest technology CoaXPress 2.0 allows a maximum output of 50 Gbps, but it is difficult to detect unevenness as the above-described data transfer rate is not feasible and as it leads to deterioration in accuracy of height measurement.

The present invention has been made in consideration of the above-described points, and provides an unevenness measuring method for a sheet-shaped material, such as films, fiber bundles, and steel plates, and an unevenness measuring device for a sheet-shaped material capable of implementing the unevenness measuring method. Solution to Problem

[1] An unevenness measuring device for a sheet-shaped material according to the present invention to solve the above-described problem is a device for measuring a depth of a local recessed portion and/or a height of a local projecting portion of a sheet-shaped material being conveyed, using a surface of the sheet-shaped material held on a roller as a measurement target. The device includes:

a light irradiation unit configured to irradiate the measurement target with illumination light, the measurement target being a surface on an opposite side to a portion that is in contact with the roller in the sheet-shaped material held on the roller;

a time-delay integration type imaging unit arranged to face the light irradiation unit and configured to receive the illumination light from the light irradiation unit;

a luminance-profile calculation unit configured to calculate a luminance profile in a main-scanning direction from a captured image generated by the imaging unit;

an unevenness determination unit configured to determine, based on the luminance profile, whether the sheet-shaped material has a recessed portion and/or a projecting portion; and

an unevenness calculation unit configured to estimate, based on the luminance profile, a depth of the recessed portion and/or a height of the projecting portion.

[2] In the unevenness measuring device for a sheet-shaped material according to the above-described [1], it is preferable that the unevenness determination unit is configured to obtain a luminance difference profile for which the luminance profile is subtracted from a reference luminance profile calculated based on the luminance profile, extract a region where the relevant luminance difference profile is greater than an upper-side threshold value, a region where the relevant luminance difference profile is smaller than a lower-side threshold value, or both those regions, and determine that the extracted region(s) has the recessed portion and/or the projecting portion, and the unevenness calculation unit is configured to estimate, based on the luminance difference profile, the depth of the recessed portion and/or the height of the projecting portion from a predetermined conversion formula.

[3] In the unevenness measuring device for a sheet-shaped material according to the above-described [1], it is preferable that the unevenness determination unit is configured to obtain a luminance division profile for which a reference luminance profile calculated based on the luminance profile is divided by the luminance profile, extract a region where the relevant luminance division profile is greater than an upper-side threshold value, a region where the relevant luminance division profile is smaller than a lower-side threshold value, or both those regions, and determine that the extracted region(s) has the recessed portion and/or the projecting portion, and the unevenness calculation unit estimates, based on the luminance division profile, the depth of the recessed portion and/or the height of the projecting portion from a predetermined conversion formula.

[4] In the unevenness measuring device for a sheet-shaped material according to any one of the above-described [1] to [3], it is preferable that a lens attached to the imaging unit is a telecentric lens.

[5] In the unevenness measuring device for a sheet-shaped material according to any one of the above-described [1] to [3], it is preferable that the light irradiation unit includes an output-fluctuation correction mechanism configured to correct fluctuations in luminance of the irradiated illumination light.

[6] An unevenness measuring method for a sheet-shaped material according to the present invention to solve the above-described problem is a method for measuring a depth of a local recessed portion and/or a height of a local projecting portion of a sheet-shaped material being conveyed, using a surface of the sheet-shaped material held on a roller as a measurement target. The method includes:

irradiating the measurement target with irradiation light, the measurement target being a surface on an opposite side to a portion that is in contact with the roller in the sheet-shaped material held on the roller;

imaging the irradiation light passed through the measurement target with performing time-delay integration to generate a captured image;

calculating a luminance profile in a main-scanning direction from the captured image;

determining, based on the luminance profile, whether the sheet-shaped material has a recessed portion and/or a projecting portion; and

estimating, based on the luminance profile, a depth of the recessed portion and/or a height of the projecting portion of the sheet-shaped material.

[7] In the unevenness measuring method for a sheet-shaped material according to the above-described [6], it is preferable that the determining whether the sheet-shaped material has the recessed portion and/or the projecting portion is performed by obtaining a luminance difference profile for which the luminance profile is subtracted from a reference luminance profile calculated based on the luminance profile, extracting a region where the relevant luminance difference profile is greater than an upper-side threshold value, a region where the relevant luminance difference profile is smaller than a lower-side threshold value, or both those regions, and determining that the extracted region(s) has the recessed portion and/or the projecting portion, and the estimating the depth of the recessed portion and/or the height of the projecting portion is performed by estimating, based on the luminance difference profile, from a predetermined conversion formula.

[8] In the unevenness measuring method for a sheet-shaped material according to the above-described [6], it is preferable that the determining whether the sheet-shaped material has the recessed portion and/or the projecting portion is performed by obtaining a luminance division profile for which a reference luminance profile calculated based on the luminance profile is divided by the luminance profile, extracting a region where the relevant luminance division profile is greater than an upper-side threshold value, a region where the relevant luminance division profile is smaller than a lower-side threshold value, or both those regions, and determining that the extracted region(s) has a recessed portion and/or a projecting portion, and the estimating the depth of the recessed portion and/or the height of the projecting portion is performed by estimating, based on the luminance division profile, from a predetermined conversion formula.

[9] In the unevenness measuring method for a sheet-shaped material according to any one of the above-described [6] to [8], it is preferable that the imaging is performed such that imaging magnification does not change with respect to changes of the measurement target in a depth direction.

[10] In the unevenness measuring method for a sheet-shaped material according to any one of the above-described [6] to [8], it is preferable that a luminance of the irradiation light is made constant.

Advantageous Effects of Invention

According to the present invention, an unevenness measuring method for a sheet-shaped material without deterioration of accuracy due to the transmittance, structure, or conveyance speed of the sheet-shaped material, and an unevenness measuring device for a sheet-shaped material capable of implementing the unevenness measuring method are provided.

Brief Description of Drawings

FIG. 1 is a schematic configuration diagram of an unevenness measuring device for a sheet-shaped material according to an embodiment of the present invention.
FIG. 2 is a diagram for explaining the structure and operation of a time-delay integration type imaging unit.
FIG. 3 is a diagram for explaining the main-scanning direction and sub-scanning direction of the time-delay integration type imaging unit.
FIG. 4 is a diagram for explaining the method of acquiring two-dimensional data at time t1 of the time-delay integration type imaging unit.
FIG. 5 is a diagram for explaining the method of acquiring two-dimensional data at time t2 of the time-delay integration type imaging unit.
FIG. 6 is a diagram for explaining the method of acquiring two-dimensional data at time t3 of the time-delay integration type imaging unit.
FIG. 7 is a diagram for explaining the method of acquiring two-dimensional data at time t4 of the time-delay integration type imaging unit.
FIG. 8 is a diagram for explaining the method of acquiring two-dimensional data at time t5 of the time-delay integration type imaging unit.
FIG. 9 is a diagram for explaining the output of the time-delay integration type imaging unit.
FIG. 10 is a diagram for explaining the number of stages of the time-delay integration type imaging unit and the corresponding heights thereof.
FIG. 11 is a diagram for explaining the positional relationship between a roller and the unevenness when the true value (the sum of the unevenness-height true value and the conveyance roller diameter/2) coincides with the measured value at a certain time tn (including tn = 0).

FIG. 12 is a diagram for explaining the positional relationship between the roller and the unevenness when an error occurs between the true value (the sum of the unevenness-height true value and the conveyance roller diameter/2) and the measured value at a certain time tn (not including tn = 0).

FIG. 13 is a diagram for explaining a height measurement error (unevenness height 5 pm) due to sampling frequency.

FIG. 14 is an explanatory diagram illustrating the respective generation results of two-dimensional data of the time-delay integration type imaging unit at the central portion of the visual field and the peripheral portion of the visual field of projecting portions of the same shape/height, in an optical system to which a macro lens is applied.

FIG. 15 is a schematic configuration diagram of an unevenness measuring device for a sheet-shaped material in an optical system to which a macro lens is applied.

FIG. 16 is an explanatory diagram illustrating an example of the generation results of two-dimensional data in the time-delay integration type imaging unit.

FIG. 17 is an explanatory diagram illustrating an example of the result of the binarization process using a lower-side threshold value.

FIG. 18 is an explanatory diagram illustrating an example of detected unevenness.

Description of Embodiments

Embodiments of the present invention will be explained with reference to the accompanying drawings. The present invention, however, is not limited to these embodiments.

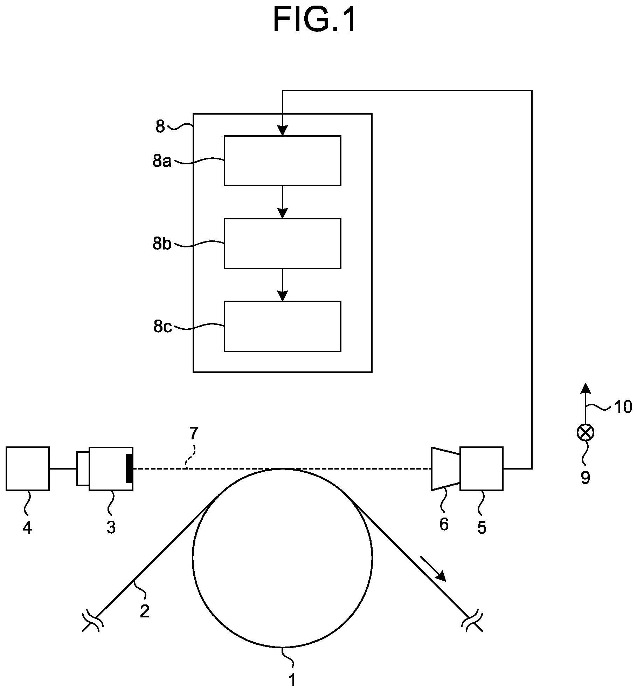

FIG. 1 is a schematic configuration diagram of an unevenness measuring device for a sheet-shaped material of the present invention. The measuring device of the present embodiment includes a roller 1, a light irradiation unit 3, an output-fluctuation correction mechanism 4, and a time-delay integration type imaging unit 5.

The roller 1 is a cylindrical body and conveys a sheet-shaped material 2 by rotating in one direction while bringing the sheet-shaped material such as a film into contact with the surface thereof. In automatic inspection, it is preferable to perform appropriate imaging timing control by rotating roller 1 at a constant speed with the power transmitted from an external power source such as an electric motor, but the appropriate imaging timing control may be performed by manually rotating the roller 1 while monitoring the rotation amount of the roller 1 using a shaft encoder or rotary encoder. Furthermore, the run-out tolerance of the roller 1 is preferably set to less than 1/2 of the value of the visual field in the sub-scanning direction (the number of steps $\times$ resolution [pm/min]) of the time-delay integration type imaging unit 5 which will be described later. This is because the unevenness deviates from the visual field in the sub-scanning direction of the time-delay integration type imaging unit 5 when axial wobbling occurs if the amount of axial wobbling of the roller 1 is more than 1/2 of the visual field in the sub-scanning direction of the time-delay integration type imaging unit 5.

The light irradiation unit 3 irradiates the surface of the sheet-shaped material 2 held on the roller 1 with light. The light irradiation unit 3 may be any of a fluorescent light, a halogen light source, a metal halide light source, a xenon light source, or an LED light source. Alternatively, a light source having specific wavelength characteristics or a light source having a specific directivity may be used. Preferably, it is a light source having a light projection region that is long in one direction, in which the quantity of light emitted from the light projection region is substantially uniform, and having an aperture angle sufficiently larger than the angle of view of a lens 6 which will be described later. The reason why it is preferable to have a long light projection region in one direction is that the visual field in a main-scanning direction 9 is generally wider with respect to the visual field in a sub-scanning direction 10 of the time-delay integration type imaging unit 5 described later. The reason why it is preferable to use a light source in which the quantity of light emitted from the light projection region is substantially uniform and has the aperture angle sufficiently larger than the angle of view of the lens 6 described later is to eliminate uneven sensitivity in the width direction (corresponding to the main-scanning direction 9) and to accurately measure the height of unevenness for the fact that, when the amount of luminescence of the light irradiation unit 3 is reduced by q%, the luminance value is also reduced by q%, because the luminance value difference of unevenness varies depending on the height of the unevenness in this method which will be described later. In this case, it will be described with a light source that uses LED illumination and emits substantially uniform light with a plurality of LED light sources arranged in a horizontal row (corresponding to a row extending in the main-scanning direction 9).

The output-fluctuation correction mechanism 4 is connected to the light irradiation unit 3 and corrects fluctuations in the luminance of the illumination light to irradiate. As in the foregoing, because the luminance value difference of unevenness varies depending on the height of the unevenness in this method, when the amount of luminescence of the light irradiation unit 3 is reduced by q%, the luminance value is also reduced by q%. In order to accurately measure the height of unevenness, it is preferable to control the amount of luminescence of the light irradiation unit 3 to be constant, that is, the luminance of the irradiated light to be constant. For example, in LED lighting, the amount of luminescence decreases due to voltage drop caused by extension cables, degradation of the LED, and the like. In response to a decrease in the amount of luminescence, it is preferable to automatically correct the dimming value so as to maintain the luminance at the start of the inspection. For example, it may be corrected by sensing the quantity of light of the light irradiation unit 3 with a plurality of built-in photodiodes, comparing it with the reference quantity of light recorded in the light irradiation unit 3, and performing feedback control of the output voltage so as to coincide with the reference quantity of light, by acquiring the luminance value from the two-dimensional data of the time-delay integration type imaging unit 5 described later and performing feedback control of the output voltage so as to coincide with a preset target luminance value, or by imaging a reference unevenness sample with the time-delay integration type imaging unit 5 described later, acquiring the peak luminance value therefrom, and performing feedback control of the output voltage so as to coincide with the reference peak luminance value.

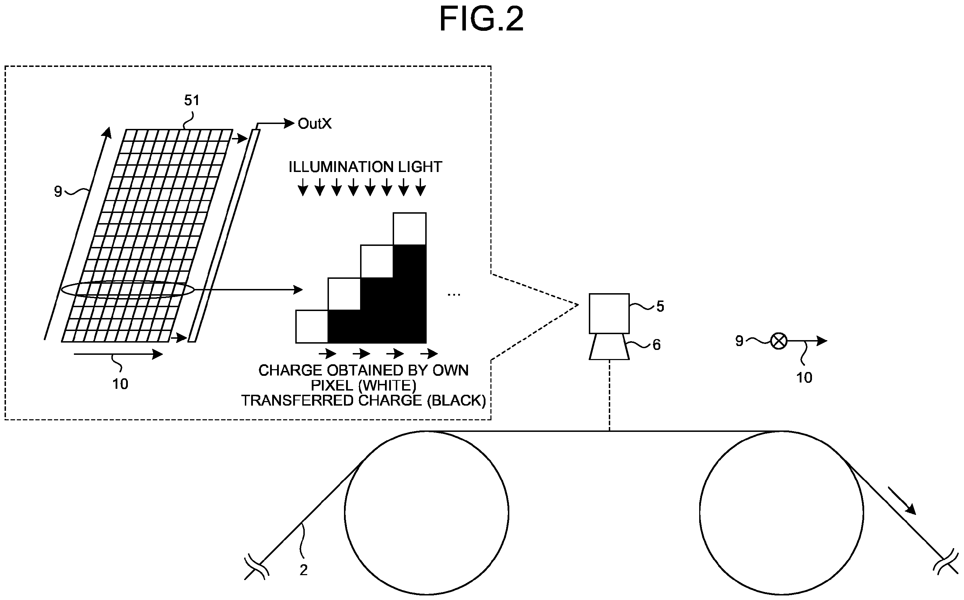

The time-delay integration type imaging unit 5 is arranged to face the light irradiation unit 3 and receives illumination light from the light irradiation unit 3. The time-delay integration type imaging unit 5 is a time delay intergrated (TDI) sensor camera. The structure and operation of the TDI sensor camera will be described in detail using FIG. 2. FIG. 2 is a diagram for explaining the structure and operation of a time-delay integration type imaging unit.

The time-delay integration type imaging unit 5 includes a pixel portion 51 in which a plurality of pixels are arrayed in a planar shape. In the pixel portion 51, the number of pixels in the width direction of the inspected object (sheet-shaped material 2) is, for example, 1024 to 8192 pixels, as in a normal line sensor camera. This direction will hereinafter be referred to as the main-scanning direction 9. The time-delay integration type imaging unit 5 has a function of adding the charges transferred from the upstream side in the transport direction orthogonal to this main-scanning direction 9 and the charge obtained by the pixel of its own, and transferring them downstream at a certain rate. This rate is defined as the charge transfer rate. The number of pixels (number of stages) in this transport direction is about 16 to 512 pixels, for example, and in a normal method of use, the inspected object is uniformly illuminated and the moving speed in the transport direction of the image on the sensor is made to coincide with the charge transfer rate. This charge transfer direction will hereinafter be referred to as the sub-scanning direction 10. By providing a plurality of pixel rows in the sub-scanning direction 10, the output obtained is the sum of the light-receiving charges from the same position on the object with respect to the transport direction, and as compared with a normal line sensor camera with only one row of light-receiving elements in the transport direction, it is possible to obtain the sensitivity that is multiplied by the number of pixels in the transport direction. Thus, the time-delay integration type imaging unit 5 is generally arranged so that the moving direction of the inspected object coincides with the sub-scanning direction 10 of the time-delay integration type imaging unit 5.

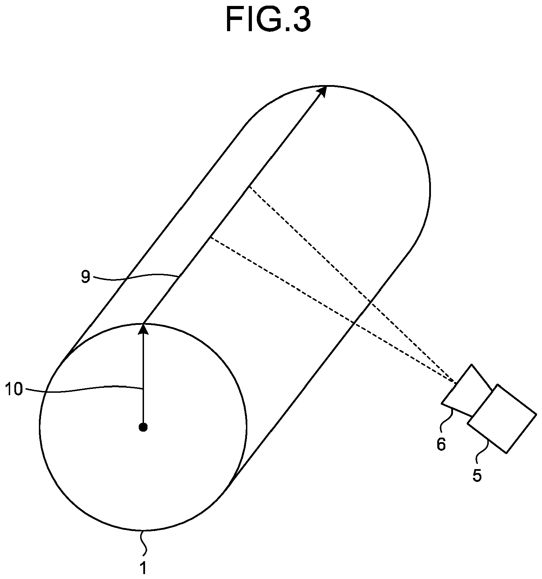

FIG. 3 is a diagram for explaining the main-scanning direction and the sub-scanning direction of the time-delay integration type imaging unit. In the unevenness measuring device for a sheet-shaped material of the present invention, as illustrated in FIG. 3, it is preferable that the main-scanning direction 9 of the time-delay integration type imaging unit 5 is arranged in a direction parallel to the bus line of the roller 1 that is a cylindrical body (in this case, corresponding to a straight line extending parallel to the central axis of the cylindrical body) and that the sub-scanning direction 10 is arranged in a direction parallel to the normal line connecting the center of the end face of the roller 1 and the relevant bus line.

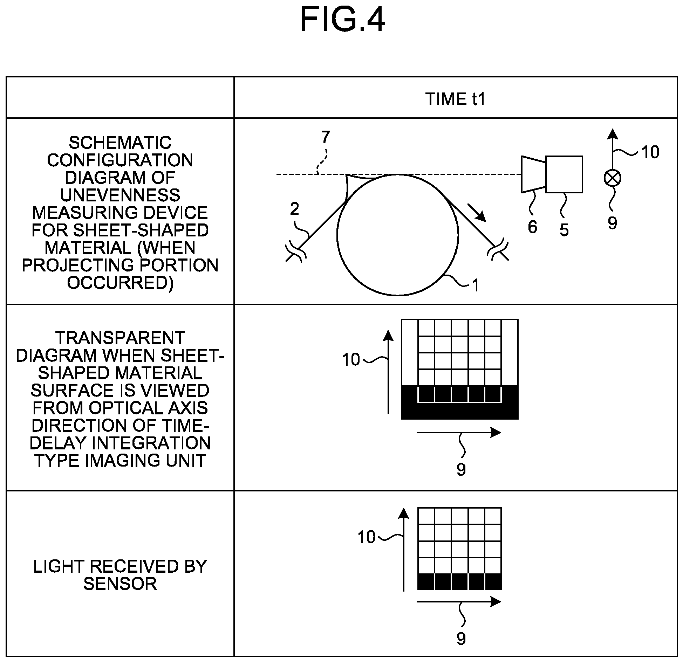

The method of generating two-dimensional image data generated by the time-delay integration type imaging unit 5 in this case will be described in detail using FIG. 4 through FIG. 9. FIG. 4 to FIG. 8 are explanatory diagrams of the method of acquiring two-dimensional image data, are diagrams illustrating the time variation (t1 to t5) from the state (time t1) in which the sheet-shaped material not including a projecting portion in the transparent diagram when the sheet-shaped material 2 including a projecting portion is conveyed, and are diagrams in which the schematic configuration diagram of the unevenness measuring device for a sheet-shaped material, the transparent diagram when the sheet-shaped material is viewed from the direction of an optical axis 7 of the time-delay integration type imaging unit, and the light-receiving mode of the sensor (imaging unit 5) are summarized. The grid of $5 \times 5$ represents the sensor. The diagrams illustrated in FIG. 4 to FIG. 8 are simplified for the sake of explanation and assume that the time-delay integration type image sensor 5 has five pixels in the main-scanning direction 9 and five pixels in the sub-scanning direction 10 and that the image sensor output is focused only on the center column in the width direction (main-scanning direction 9).

For the sake of explanation, the pixel position may be expressed by "(pixel position counted from the left in the main-scanning direction 9 and pixel position counted from the bottom in the sub-scanning direction 10)". For example, in FIG. 4, the lower left of the diagram is (1, 1) and the upper right is (5, 5). Note that, hereinafter, the coordinates indicating the pixel position may be described as (x, y).

FIG. 4 is a diagram for explaining the method of acquiring two-dimensional data at time t1 of the time-delay integration type imaging unit. The transparent diagram when a sheet-shaped material surface is viewed from the direction of the optical axis 7 of the time-delay integration type imaging unit will be described. The black portions at the bottom stage of the grid are dark portions caused by imaging the surface of the roller 1, and this is because the illumination light from the light irradiation unit 3 was blocked. In FIG. 4, as a projecting portion is not present in the visual field in the sub-scanning direction 10, the light irradiated onto the surface of the sheet-shaped material 2 enters the time-delay integration type imaging unit 5 without being blocked by the projecting portion. In the sensor, the pixel positions (1, 1) through (5, 1) are shielded from the light. It is preferable that the surface of the roller 1 thus appears within the visual field in the sub-scanning direction 10 of the time-delay integration type imaging unit 5. This is because the height of the projecting portion is calculated as a relative height based on the height of the surface of the roller 1.

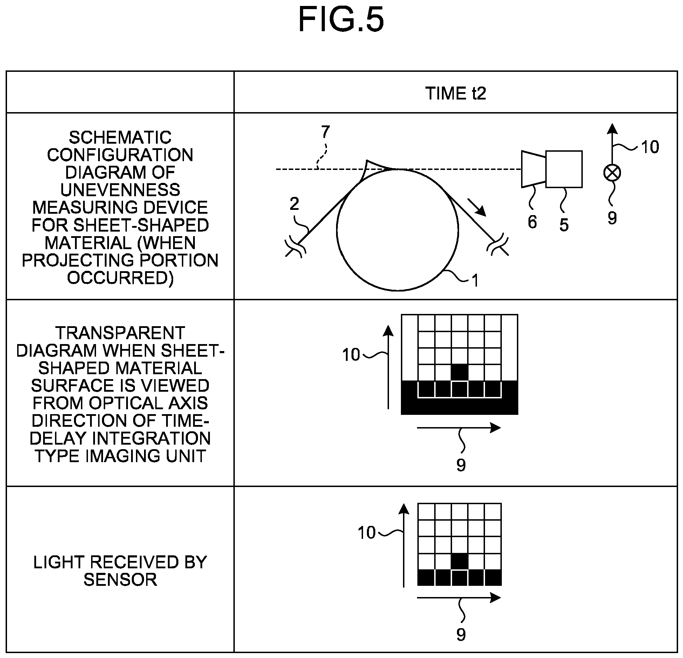

FIG. 5 is a diagram for explaining the method of acquiring two-dimensional data at time t2 of the time-delay integration type imaging unit. The light irradiated onto the surface of the sheet-shaped material 2 is partially blocked by the surface of the roller 1 and the projecting portion and enters the time-delay integration type imaging unit 5. Therefore, the light reception by the sensor is blocked at the pixel positions (1, 1) through (5, 1) and (3, 2).

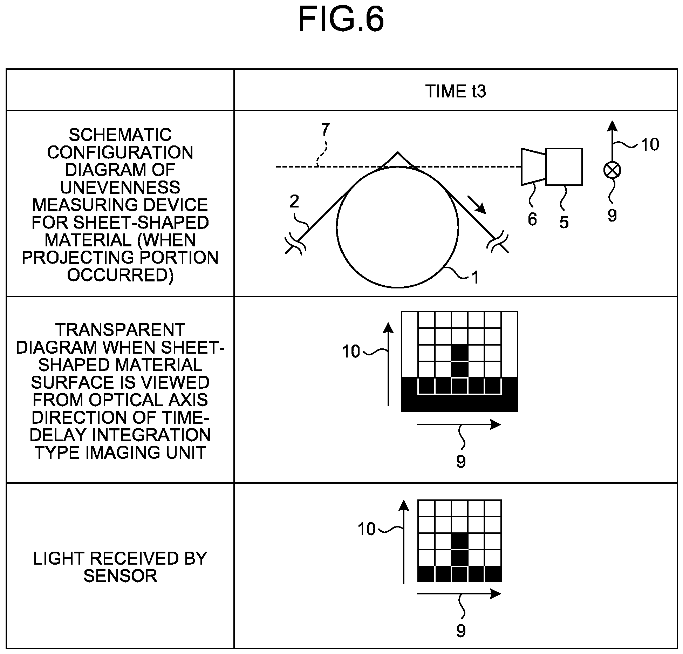

FIG. 6 is a diagram for explaining the method of acquiring two-dimensional data at time t3 of the time-delay integration type imaging unit. The light irradiated onto the surface of the sheet-shaped material 2 is partially blocked by the surface of the roller 1 and the projecting portion and enters the time-delay integration type imaging unit 5, and thus, the light reception by the sensor is blocked at the pixel positions (1, 1) to (5, 1), (3, 2), and (3, 3).

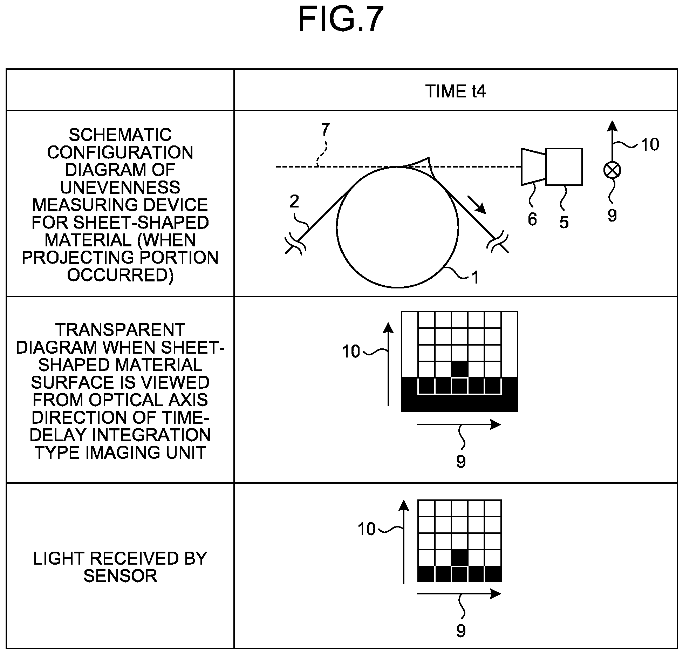

FIG. 7 is a diagram for explaining the method of acquiring two-dimensional data at time t4 of the time-delay integration type imaging unit. The light irradiated onto the surface of the sheet-shaped material 2 is partially blocked by the surface of the roller 1 and the projecting portion and enters the time-delay integration type imaging unit 5. Therefore, the light reception by the sensor is blocked at the pixel positions (1, 1) through (5, 1) and (3, 2).

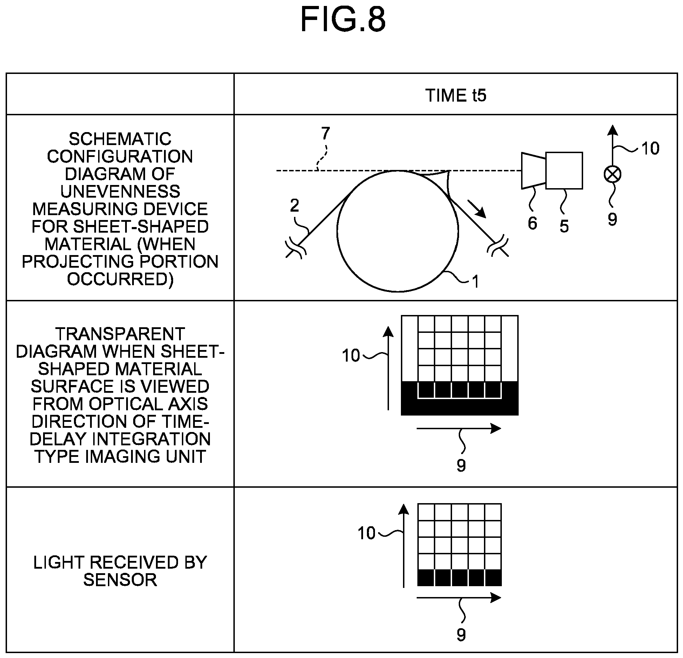

FIG. 8 is a diagram for explaining the method of acquiring two-dimensional data at time t5 of the time-delay integration type imaging unit. The light irradiated onto the surface of the sheet-shaped material 2 is intercepted by the surface of the roller 1 and enters the time-delay integration type imaging unit 5. Therefore, the light reception by the sensor is blocked at the pixel positions (1, 1) to (5, 1).

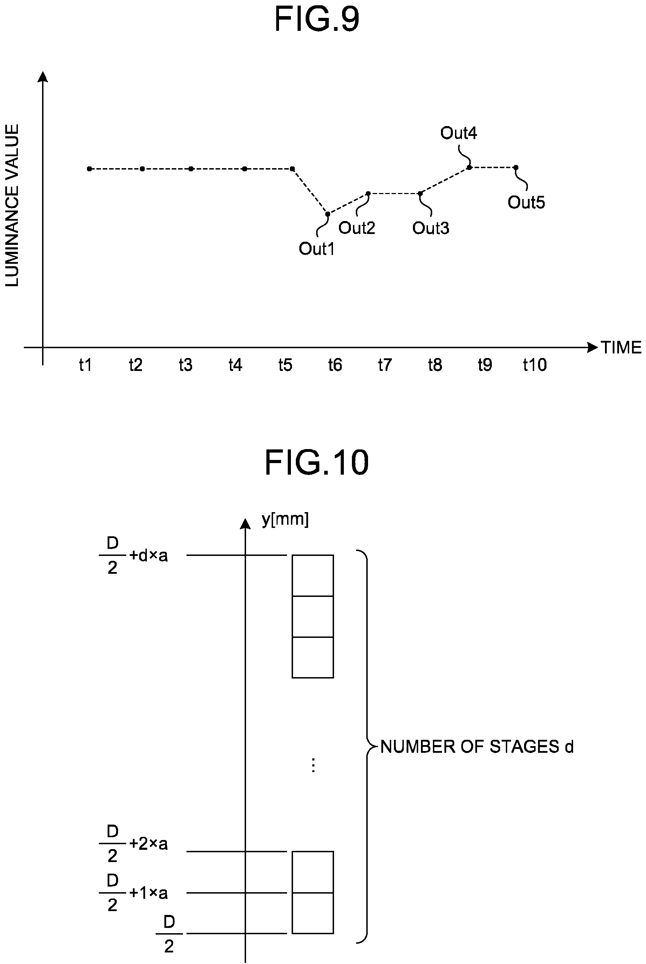

FIG. 9 is a diagram for explaining the output of the time-delay integration type imaging unit 5. At time t6, the sum of the pixel values (integrated exposure) corresponding to the respective quantities of the light received at the pixel position (3, 1) at time t1, the pixel position (3, 2) at time t2, the pixel position (3, 3) at time t3, the pixel position (3, 4) at time t4, and the pixel position (3, 5) at time t5 is output as a luminance value Out1. Similarly, at time t7, the sum of the pixel values (integrated exposure) corresponding to the respective quantities of the light received at the pixel position (3, 1) at time t2, the pixel position (3, 2) at time t3, the pixel position (3, 3) at time t4, the pixel position (3, 4) at time t5, and the pixel position (3, 5) at time t6 is output as a luminance value Out2. In other words, it is the sum of the luminance values at pixel positions shifted by one stage for each time change. The same applies to luminance values Out3 and thereafter. Therefore, the luminance value (output) OutX at a certain time tn of the time-delay integration type imaging unit 5 is expressed by the following Expression (1).

$$\text{OutX} = \sum_{i=1}^{d} I_{i,n-d+(i-1)} \qquad \cdots (1)$$

$I_{i,n-d+(i-1)}$: Luminance value of the i-th stage at time $t_{n-a+(i-1)}$
d: Number of stages of the time-delay integration type imaging unit 5
X: n - d

As the projecting portion is included in the sheet-shaped material, a luminance value difference occurs with respect to a portion where the projecting portion is not included. This luminance value difference is larger as the projecting portion is higher, and is correlated with the height of the projecting portion. Therefore, the height of the projecting portion can be calculated from the luminance value difference. Note that the projecting height estimated from the luminance value difference obtained from OutX may be affected by lens aberrations and the like depending on the optical system and installation conditions. For example, in the case of an optical system in which a macro lens for which the principal ray has an angle of view with respect to the optical axis is applied to the lens 6, the acquired image is relatively darker at a peripheral portion of the visual field than at the central portion of the visual field, even if a subject of the same brightness is imaged due to the influence of aberrations and peripheral light attenuation (lens shading). In the case of such an optical system, the above-described luminance value differences differ depending on whether the image position is at the central portion of the visual field or at the peripheral portion of the visual field, even if the projecting portions have the same height. Therefore, in the height estimation of a projecting portion based on a simple luminance value difference with respect to the portion where the projecting portion is not included, an error may occur with respect to a true value (actual projecting height), depending on the imaging position. As a countermeasure, the luminance value difference obtained from OutX may be corrected by a luminance difference profile or a luminance division profile (details will be described later) created based on the luminance profile and on a reference luminance profile acquired in advance. Furthermore, as a countermeasure, a projecting portion for which the height has already been measured in advance may be measured in this configuration and calculated experimentally using the luminance value difference at that time.

When it is assumed that the number of stages of the time-delay integration type imaging unit 5 is d and the resolution of the time-delay integration type imaging unit 5 in the sub-scanning direction 10 is a (um), FIG. 10 illustrates the height (y-coordinate) (mm) of each stage, and the luminance value of the i-th stage (integer of $i \geq 1$) is obtained by the following Conditional Expression (2).

$$\text{Condition 1)If } \mathrm{Ii, n} - \mathrm{d} + (\mathrm{i} - 1) = \frac{\mathrm{D}}{2} + (\mathrm{i} - 1) \times \mathrm{a} \times 10^{-3}$$
$$\geq \mathrm{H, luminance \ value \ is \ p}$$
$$\text{Condition 2)If } \mathrm{Ii, n} - \mathrm{d} + (\mathrm{i} - 1) = \frac{\mathrm{D}}{2} + \mathrm{i} \times \mathrm{a} \leq \mathrm{H, luminance \ value \ is \ b}$$
$$\text{Condition 3)If } \mathrm{Ii, n} - \mathrm{d} + (\mathrm{i} - 1) = \frac{\mathrm{D}}{2} + (\mathrm{i} - 1) \times \mathrm{a} \times 10^{-3} < \mathrm{H} \qquad \cdots (2)$$
$$< \frac{\mathrm{D}}{2} + \mathrm{i} \times \mathrm{a} \times 10^{-3}, (\mathrm{p} - \mathrm{b}) \times \left\{ \frac{\left(\frac{\mathrm{D}}{2} + \mathrm{i} \times \mathrm{a}\right) - H}{\mathrm{a} \times 10^{-3}} \right\}$$

H: y-coordinate [mm] of the unevenness at a certain time tn (calculated from the following Expression (3))
D: Conveyance roller diameter [mm]
a: Resolution [pm]

Note that it is assumed that the pixel value (luminance value) is p when transmitted without being blocked by the unevenness and the pixel value is b when blocked completely by the unevenness. Furthermore, changes in pixel values that occur due to temporal differences in the distance between the unevenness and the tip of the camera lens from hour to hour are not taken into consideration.

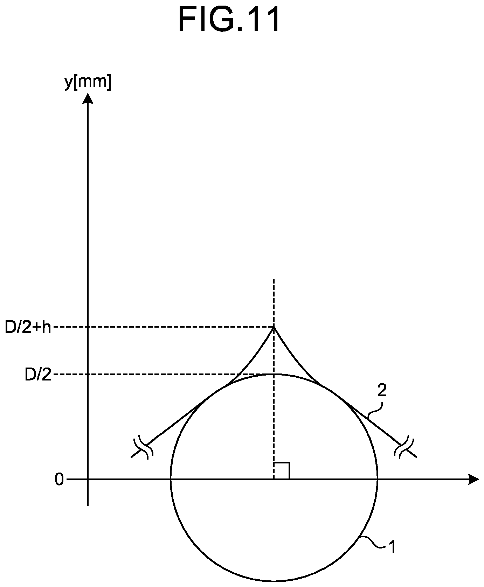

In order to capture the apexes of the unevenness present in the sheet-shaped material in a manufacturing process where the conveyance speed exceeds 200 m/min, it is preferable that the sampling frequency of the time-delay integration type imaging unit 5 be 50 kHz or higher. The reason for this will be explained below using FIG. 11 through FIG. 13.

The temporal change of the local unevenness height of the sheet-shaped material 2 held on the roller 1 was modeled. Considering the movement of the unevenness as a simple harmonic motion, the coordinate axes were taken as illustrated in FIG. 11, and the y-coordinate of the unevenness at a certain time tn was expressed by the following Expression (3). The time tn at which the unevenness height H becomes the highest (becomes the unevenness-height true value) is assumed 0.

$$\mathrm{H} = \left(\frac{\mathrm{D}}{2} + h\right) \mathrm{COS}(\omega tn) \qquad \left(\text{if } \left(\frac{\mathrm{D}}{2} + h\right) \mathrm{COS}(\omega tn) > \frac{\mathrm{D}}{2}\right)$$
$$\mathrm{H} = \frac{\mathrm{D}}{2} \qquad \left(\text{if } \left(\frac{\mathrm{D}}{2} + h\right) \mathrm{COS}(\omega tn) \leq \frac{\mathrm{D}}{2}\right) \qquad \cdots (3)$$

tn: Time [s], h: Unevenness-height true value [mm], $\omega$: Angular velocity [rad/s]

Using Expression (3), the y-coordinate of the unevenness at each time corresponding to the sampling frequency was calculated. The calculation was made by considering the unevenness height to be sufficiently small relative to the radius of the roller 1 and obtaining the angular velocity as (sheet-shaped material transport speed) / (roller radius).

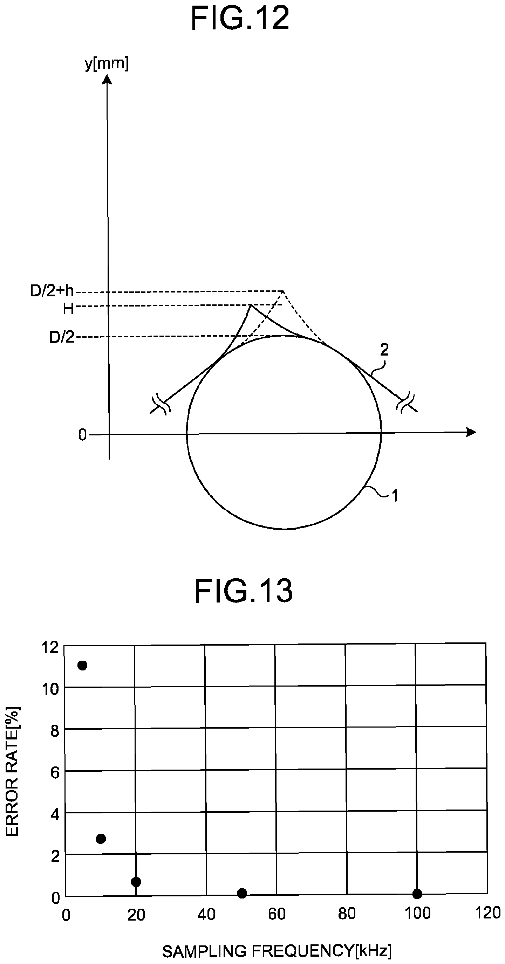

If the time to plot (time at which the height is measured) tn = 0 is included, the true value (the sum of the unevenness-height true value and the conveyance roller diameter/2) coincides with the measured value. Meanwhile, if tn = 0 is not included, an error may occur between the true value (the sum of the unevenness-height true value and the conveyance roller diameter/2) and the measured value. In the case of frequency f kHz, as illustrated in FIG. 12, tn = 0 is not included, and assuming that the time at which the error between the true value and the measured value becomes maximum is tn', tn' is expressed by the following Expression (4).

$$\mathrm{tn}' = \frac{1}{2\mathrm{f} \times 10^3} \qquad \cdots (4)$$

f: Sampling frequency [kHz]

The relationship between the error rate for the true value of this measurement value (the sum of the unevenness-height true value and the conveyance roller diameter/2) and the sampling frequency was calculated. FIG. 13 illustrates the relationship between the sampling frequency [kHz] and the error rate [%] for the true value (the unevenness-height true value and the conveyance roller diameter/2), when the unevenness height is 5 um. The error rates at the sampling frequencies of 5, 10, 20, 50, and 100 kHz are plotted. When the sampling frequency is 50 kHz or higher, the error rate is less than 0.12%. If the measurement is performed at a sampling frequency of about 50 kHz, the error is generally negligible because the dynamic range is below 60 dB, which is the dynamic range of a typical image sensor.

It is preferable that the lens 6 is a telecentric lens. This is because, when the unevenness of a sheet-shaped material held on the roller 1 is measured, the magnification changes in the case of a macro lens as the unevenness moves in the depth direction of the time-delay integration type imaging unit 5, so that the unevenness may appear to move in an obliquely upward direction depending on the viewing position. In the case of a telecentric lens, the magnification is fixed, so the unevenness does not appear to move in an obliquely upward direction.

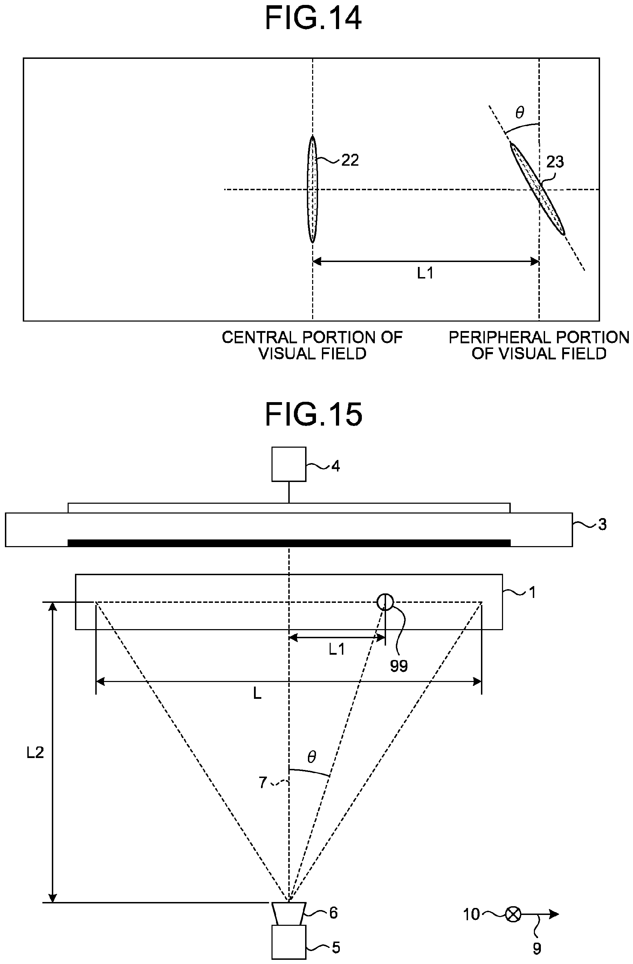

When a macro lens is used, the unevenness appears to move in an obliquely upward direction depending on the viewing position as in the foregoing. Therefore, for example, when images of a projecting portion 99 of the same shape and height are taken at the central portion of the visual field and at the peripheral portion of the visual field, as illustrated in FIG. 14, a projecting portion 23 captured at the peripheral portion of the visual field is imaged as if it were tilted by an angle θ with respect to a projecting portion 22 captured at the central portion of the visual field. The tilt angle θ is the angle θ determined by the visual field position L1 (the central portion of the visual field, distance from the optical axis 7) of the projecting portion 99 in the camera field of view L and the distance L2 between the lens 6 and the roller 1 (distance L2 is determined by the focal length of the lens 6) (see FIG. 15). That is, in an imaging system using a general macro lens, for example, when the area and width/height of a region of the projecting portion 99 extracted on an image are desired to be measured, with the image as is, the same measurement process may be not applicable to the image as the imaged shape differs when imaged at the central portion of the visual field and at the peripheral portion of the visual field. Meanwhile, for example, it is suitable to perform, on the shape of the region of the projecting portion 99, a shape transformation of the region by an affine transformation matrix (skew) as in the following Expression (5) using the above-described θ according to its imaging position.

$$\begin{pmatrix} x' \\ y' \\ 1 \end{pmatrix} = \begin{pmatrix} 1 & \tan\theta & 0 \\ 0 & 1 & 0 \\ 0 & 0 & 1 \end{pmatrix}^{-1} \begin{pmatrix} x \\ y \\ 0 \end{pmatrix} = \begin{pmatrix} 1 & \dfrac{L1}{L2} & 0 \\ 0 & 1 & 0 \\ 0 & 0 & 1 \end{pmatrix}^{-1} \begin{pmatrix} x \\ y \\ 0 \end{pmatrix} \quad \cdots (5)$$

Coordinates before transformation: (x, y), Coordinates after transformation: (x', y')

The time-delay integration type imaging unit 5 is arranged so that, with the portion of the sheet-shaped material 2 held on the roller 1 that is in contact with the roller 1 as the roller contact portion, the side of the surface of the roller contact portion that is not in contact with the roller 1 is imaged.

An image processing unit 8 is connected to the time-delay integration type imaging unit 5 (see FIG. 1). The information on the light received by the time-delay integration type imaging unit 5 is photoelectrically converted and is received by the image processing unit 8 as two-dimensional image data. The image processing unit 8 extracts an unevenness portion from the two-dimensional data, and records and displays the relevant information. The defect occurrence position in the transport direction may be determined based on the signal from an encoder for measuring transport distance not depicted, or the unevenness occurrence position may be determined based on the elapsed time from the start of the inspection. Furthermore, the origin position of the inspection may be defined based on information from a position detection sensor (not depicted) provided to detect the origin of the roller 1 in the transport direction. The unevenness occurrence position in the width direction of the sheet-shaped material 2 may be determined based on which pixel position in the main-scanning direction 9 of the time-delay integration type imaging unit 5 of the time-delay integration type imaging unit 5 was detected. If the width direction of the sheet-shaped material 2 is larger as compared with the visual field width in the main-scanning direction 9 of the time-delay integration type imaging unit 5, by installing the time-delay integration type imaging unit 5 on a slider (not depicted) that is movable in a direction substantially parallel to the longitudinal direction of the roller 1, the defect occurrence position in the width direction of the sheet-shaped material 2 may be managed by the value for which the moving amount of the slider and the pixel position at which it was detected in the main-scanning direction 9 of the time-delay integration type imaging unit 5 are added up. At this time, the light irradiation unit 3 may be installed on the slider as with the time-delay integration type imaging unit 5, or may be independently installed at a length that allows irradiation of the entire longitudinal area of the roller 1 in substantially uniform brightness.

The image processing unit 8 is made up of a luminance-profile calculation unit 8a, an unevenness determination unit 8b, and an unevenness calculation unit 8c. The luminance-profile calculation unit 8a calculates a luminance profile in the main-scanning direction 9 from the two-dimensional image data generated by the time-delay integration type imaging unit 5. The unevenness determination unit 8b determines that, based on the luminance profile in the main-scanning direction 9, the sheet-shaped material has a recessed portion and/or a projecting portion. The unevenness determination unit 8b may obtain a luminance difference profile for which the luminance profile is subtracted from the reference luminance profile calculated based on the luminance profile in the main-scanning direction 9 or a luminance division profile for which the luminance profile is divided by the reference luminance profile, extract a region where the luminance difference profile or the luminance division profile is greater than an upper-side threshold value, a region where the luminance difference profile or the luminance division profile is smaller than a lower-side threshold value, or both those regions, and determine that the extracted region has a recessed portion and/or a projecting portion. The reference luminance profile may be calculated by applying a smoothing filter process and the like to the luminance profile in the main-scanning direction 9 to remove spike noise and the like, or the luminance profile that is calculated from the two-dimensional image data generated by imaging a smooth sheet-shaped material having no local unevenness portions that is held on the roller 1 with the time-delay integration type imaging unit 5 in advance may be used. The unevenness calculation unit 8c estimates, based on the luminance profile, the depth of the recessed portion and/or the height of the projecting portion in the sheet-shaped material. For example, as the luminance value within the extracted region has a correlation with the depth of the recessed portion and/or the height of the projecting portion, the recessed portion and/or the height of the projecting portion is estimated by a conversion formula calculated in advance. As the luminance profile, the above-described luminance difference profile may be used or the luminance division profile may be used.

However, as in the foregoing, in an optical system in which a macro lens is applied to the lens 6, the peripheral portion of the visual field appears relatively darker than the central portion of the visual field due to aberrations and peripheral light attenuation (lens shading). In the case of such an optical system, the luminance values in the above-described regions obtained from the reference luminance profile differ depending on whether the imaged position is at the central portion of the visual field of the image or at the peripheral portion of the visual field, even for the recessed portions/projecting portions having the same depth/height, and an error with the true value (actual recessed portion depth/projecting portion height) occurs. Meanwhile, for example, a subject having a substantially uniform luminance in the main-scanning direction 9, such as a diffusion plate irradiated with illumination, is imaged by the time-delay integration type imaging unit 5 and is acquired in advance as reference luminance image data. The luminance profile in the main-scanning direction 9 of this reference luminance image data is obtained as the reference luminance profile, and the luminance difference profile or the luminance division profile is obtained by obtaining differences or by dividing the luminance profile by the reference luminance profile. As this luminance difference profile or luminance division profile is the data for which the effect of peripheral attenuation (lens shading) is corrected, in order to reduce the error with the true value (actual recessed portion depth/projecting portion height) due to the imaging position (central portion of the visual field or peripheral portion of the visual field), it is preferable to estimate the depth of the recessed portion and/or the height of the projecting portion of the above-described sheet-shaped material based on the above-described profile.

Example

The following describes further in detail the present invention with reference to an example. Note that the present invention is not interpreted to be limited by this example.

A local projecting portion 11 of a film held on a conveyance roller for which hard chrome plating was applied onto the surface was measured.

As the light irradiation unit 3, a white LED bar illumination of 600,000 lux was used.

As the time-delay integration type imaging unit 5, a TDI camera with 4096 pixels in the main-scanning direction 9 and 64 pixels in the sub-scanning direction 10 was used with 12-bit gradation and a line rate of 50 kHz.

The image processing unit 8 was made up of a frame grabber board and a personal computer. The image processing unit 8 performs image processing on the two-dimensional image data acquired from the time-delay integration type imaging unit 5 to detect and determine unevenness. The specific flow of the image processing is as follows.

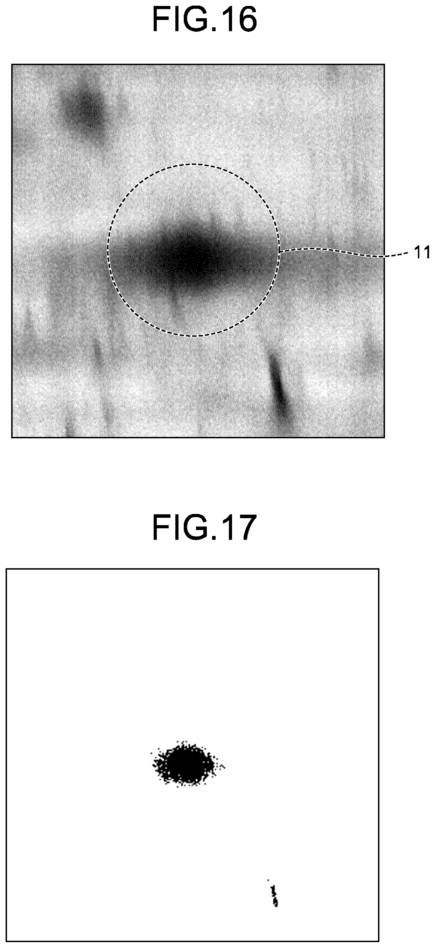

(1) The two-dimensional image illustrated in FIG. 16 was acquired from the time-delay integration type imaging unit 5 while the conveyance roller was rotated at a constant rotational speed.
(2) A luminance profile in the main-scanning direction 9 was calculated from the above-described two-dimensional image.
(3) A reference luminance profile was calculated by applying smoothing filter processing to the above-described luminance profile to remove spike noise and the like.
(4) A luminance difference profile between the above-described luminance profile and the above-described reference luminance profile was calculated.
(5) For the above-described luminance difference profile, binarization processing was performed by setting a lower-side threshold value, and by extracting the regions lower than the lower-side threshold value, the binarized image illustrated in FIG. 17 was acquired. Note that the regions lower than the lower-side threshold value were extracted this time around for the measurement of a projecting portion, but when measuring a recessed portion, an upper-side threshold value is set, and the regions higher than the upper-side threshold value are extracted.

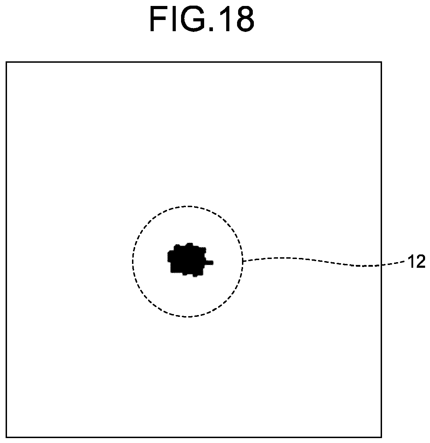

(6) Using only regions having an area exceeding 200 pixels as detected unevenness 12, the image illustrated in FIG. 18 was acquired by performing expansion and contraction processing.

(7) The minimum luminance value was calculated in the above-described regions. Note that the minimum luminance value was calculated this time around for the measurement of a projecting portion, but when measuring a recessed portion, the maximum luminance value is calculated.

(8) The above-described minimum luminance value was converted to the height of the projecting portion using a conversion formula calculated in advance.

(9) The converted height of the projecting portion was compared with a preset reference value, and the acceptance was determined with the height at an acceptable level when it was less than or equal to the reference value and the height at an unacceptable level when it was greater than the reference value.

The images illustrated in FIG. 16 through FIG. 18 are determined as the height at unacceptable levels.

The images in FIG. 16 to FIG. 18 are illustrated, in order to facilitate understanding of the explanation, by clipping out only 256 pixels × 256 pixels, which is a part of the 4096 pixels × 2048 pixels and is the region including unevenness.

Industrial Applicability

The present invention is effective not only as an inspection device for films and the like but also as an inspection device in manufacturing processes of any sheet-shaped materials such as webs, fiber bundles, and steel plates.

Reference Signs List

1    ROLLER
2    SHEET-SHAPED MATERIAL
3    LIGHT IRRADIATION UNIT
4    OUTPUT-FLUCTUATION CORRECTION MECHANISM
5    TIME-DELAY INTEGRATION TYPE IMAGING UNIT
6    LENS
7    OPTICAL AXIS OF TIME-DELAY INTEGRATION TYPE IMAGING UNIT
8    IMAGE PROCESSING UNIT
8a    LUMINANCE-PROFILE CALCULATION UNIT
8b    UNEVENNESS DETERMINATION UNIT
8c    UNEVENNESS CALCULATION UNIT
9    MAIN-SCANNING DIRECTION
10    SUB-SCANNING DIRECTION
11    PROJECTING PORTION
12    DETECTED UNEVENNESS
22    PROJECTING PORTION IMAGED AT CENTRAL PORTION OF VISUAL FIELD
23    PROJECTING PORTION IMAGED AT PERIPHERAL PORTION OF VISUAL FIELD
51    PIXEL PORTION
99    PROJECTING PORTION OF THE SAME SHAPE/HEIGHT

**Claims**

1.  An unevenness measuring device for a sheet-shaped material for measuring a depth of a local recessed portion and/or a height of a local projecting portion of a sheet-shaped material being conveyed, using a surface of the sheet-shaped material held on a roller as a measurement target, the device comprising:

    a light irradiation unit configured to irradiate the measurement target with illumination light, the measurement target being a surface on an opposite side to a portion that is in contact with the roller in the sheet-shaped material held on the roller;

a time-delay integration type imaging unit arranged to face the light irradiation unit and configured to receive the illumination light from the light irradiation unit;

a luminance-profile calculation unit configured to calculate a luminance profile in a main-scanning direction from a captured image generated by the imaging unit;

an unevenness determination unit configured to determine, based on the luminance profile, whether the sheet-shaped material has a recessed portion and/or a projecting portion; and

an unevenness calculation unit configured to estimate, based on the luminance profile, a depth of the recessed portion and/or a height of the projecting portion.

2. The unevenness measuring device for a sheet-shaped material according to claim 1, wherein

the unevenness determination unit is configured to obtain a luminance difference profile for which the luminance profile is subtracted from a reference luminance profile calculated based on the luminance profile, extract a region where the relevant luminance difference profile is greater than an upper-side threshold value, a region where the relevant luminance difference profile is smaller than a lower-side threshold value, or both those regions, and determine that the extracted region(s) has the recessed portion and/or the projecting portion, and the unevenness calculation unit is configured to estimate, based on the luminance difference profile, the depth of the recessed portion and/or the height of the projecting portion from a predetermined conversion formula.

3. The unevenness measuring device for a sheet-shaped material according to claim 1, wherein

the unevenness determination unit is configured to obtain a luminance division profile for which a reference luminance profile calculated based on the luminance profile is divided by the luminance profile, extract a region where the relevant luminance division profile is greater than an upper-side threshold value, a region where the relevant luminance division profile is smaller than a lower-side threshold value, or both those regions, and determine that the extracted region(s) has the recessed portion and/or the projecting portion, and the unevenness calculation unit estimates, based on the luminance division profile, the depth of the recessed portion and/or the height of the projecting portion from a predetermined conversion formula.

4. The unevenness measuring device for a sheet-shaped material according to any one of claims 1 to 3, wherein a lens attached to the imaging unit is a telecentric lens.

5. The unevenness measuring device for a sheet-shaped material according to any one of claims 1 to 3, wherein the light irradiation unit includes an output-fluctuation correction mechanism configured to correct fluctuations in luminance of the irradiated illumination light.

6. An unevenness measuring method for a sheet-shaped material for measuring a depth of a local recessed portion and/or a height of a local projecting portion of a sheet-shaped material being conveyed, using a surface of the sheet-shaped material held on a roller as a measurement target, the method comprising:

irradiating the measurement target with irradiation light, the measurement target being a surface on an opposite side to a portion that is in contact with the roller in the sheet-shaped material held on the roller;

imaging the irradiation light passed through the measurement target with performing time-delay integration to generate a captured image;

calculating a luminance profile in a main-scanning direction from the captured image;

determining, based on the luminance profile, whether the sheet-shaped material has a recessed portion and/or a projecting portion; and

estimating, based on the luminance profile, a depth of the recessed portion and/or a height of the projecting portion of the sheet-shaped material.

7. The unevenness measuring method for a sheet-shaped material according to claim 6, wherein

the determining whether the sheet-shaped material has the recessed portion and/or the projecting portion is performed by obtaining a luminance difference profile for which the luminance profile is subtracted from a reference luminance profile calculated based on the luminance profile, extracting a region where the relevant luminance difference profile is greater than an upper-side threshold value, a region where the relevant luminance difference profile is smaller than a lower-side threshold value, or both those regions, and determining that the extracted region(s) has the recessed portion and/or the projecting portion, and

the estimating the depth of the recessed portion and/or the height of the projecting portion is performed by estimating, based on the luminance difference profile, from a predetermined conversion formula.

8. The unevenness measuring method for a sheet-shaped material according to claim 6, wherein

the determining whether the sheet-shaped material has the recessed portion and/or the projecting portion is performed by obtaining a luminance division profile for which a reference luminance profile calculated based on the luminance profile is divided by the luminance profile, extracting a region where the relevant luminance division profile is greater than an upper-side threshold value, a region where the relevant luminance division profile is smaller than a lower-side threshold value, or both those regions, and determining that the extracted region(s) has a recessed portion and/or a projecting portion, and
the estimating the depth of the recessed portion and/or the height of the projecting portion is performed by estimating, based on the luminance division profile, from a predetermined conversion formula.

9. The unevenness measuring method for a sheet-shaped material according to any one of claims 6 to 8, wherein the imaging is performed such that imaging magnification does not change with respect to changes of the measurement target in a depth direction.

10. The unevenness measuring method for a sheet-shaped material according to any one of claims 6 to 8, wherein a luminance of the irradiation light is made constant.

# FIG.1

# FIG.2

51

OutX

ILLUMINATION LIGHT

9

10

CHARGE OBTAINED BY OWN
PIXEL (WHITE)
TRANSFERRED CHARGE (BLACK)

5

6

9

10

2

EP 4 411 317 A1

# FIG.3

# FIG.4

| | TIME t1 |
|---|---|
| SCHEMATIC CONFIGURATION DIAGRAM OF UNEVENNESS MEASURING DEVICE FOR SHEET-SHAPED MATERIAL (WHEN PROJECTING PORTION OCCURRED) | |
| TRANSPARENT DIAGRAM WHEN SHEET-SHAPED MATERIAL SURFACE IS VIEWED FROM OPTICAL AXIS DIRECTION OF TIME-DELAY INTEGRATION TYPE IMAGING UNIT | |
| LIGHT RECEIVED BY SENSOR | |

# FIG.5

| | TIME t2 |
|---|---|
| SCHEMATIC CONFIGURATION DIAGRAM OF UNEVENNESS MEASURING DEVICE FOR SHEET-SHAPED MATERIAL (WHEN PROJECTING PORTION OCCURRED) | |
| TRANSPARENT DIAGRAM WHEN SHEET-SHAPED MATERIAL SURFACE IS VIEWED FROM OPTICAL AXIS DIRECTION OF TIME-DELAY INTEGRATION TYPE IMAGING UNIT | |
| LIGHT RECEIVED BY SENSOR | |

# FIG.6

| | TIME t3 |
|---|---|
| SCHEMATIC CONFIGURATION DIAGRAM OF UNEVENNESS MEASURING DEVICE FOR SHEET-SHAPED MATERIAL (WHEN PROJECTING PORTION OCCURRED) | |
| TRANSPARENT DIAGRAM WHEN SHEET-SHAPED MATERIAL SURFACE IS VIEWED FROM OPTICAL AXIS DIRECTION OF TIME-DELAY INTEGRATION TYPE IMAGING UNIT | |
| LIGHT RECEIVED BY SENSOR | |

# FIG.7

| | TIME t4 |
|---|---|
| SCHEMATIC CONFIGURATION DIAGRAM OF UNEVENNESS MEASURING DEVICE FOR SHEET-SHAPED MATERIAL (WHEN PROJECTING PORTION OCCURRED) | |
| TRANSPARENT DIAGRAM WHEN SHEET-SHAPED MATERIAL SURFACE IS VIEWED FROM OPTICAL AXIS DIRECTION OF TIME-DELAY INTEGRATION TYPE IMAGING UNIT | |
| LIGHT RECEIVED BY SENSOR | |

# FIG.8

| | TIME t5 |
|---|---|
| SCHEMATIC CONFIGURATION DIAGRAM OF UNEVENNESS MEASURING DEVICE FOR SHEET-SHAPED MATERIAL (WHEN PROJECTING PORTION OCCURRED) | |
| TRANSPARENT DIAGRAM WHEN SHEET-SHAPED MATERIAL SURFACE IS VIEWED FROM OPTICAL AXIS DIRECTION OF TIME-DELAY INTEGRATION TYPE IMAGING UNIT | |
| LIGHT RECEIVED BY SENSOR | |

# FIG.9

# FIG.10

# FIG.11

# FIG.12

# FIG.13

# FIG.14

CENTRAL PORTION OF VISUAL FIELD

PERIPHERAL PORTION OF VISUAL FIELD

# FIG.15

## FIG.16

11

## FIG.17

# FIG.18

| INTERNATIONAL SEARCH REPORT | International application No. |
|---|---|
| | **PCT/JP2022/031600** |

**A. CLASSIFICATION OF SUBJECT MATTER**

*G01B 11/30*(2006.01)i; *G01B 11/22*(2006.01)i
FI: G01B11/30 A; G01B11/22 H

According to International Patent Classification (IPC) or to both national classification and IPC

**B. FIELDS SEARCHED**

Minimum documentation searched (classification system followed by classification symbols)

G01B11/30; G01B11/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-109106 A (FUJITSU LTD) 08 April 2004 (2004-04-08)<br>paragraphs [0019]-[0038], fig. 1-14 | 1-10 |
| Y | JP 2021-071480 A (JFE STEEL CORP) 06 May 2021 (2021-05-06)<br>paragraph [0012], fig. 1 | 1-10 |
| Y | JP 2006-138830 A (NIPPON ELECTRO SENSARI DEVICE KK) 01 June 2006 (2006-06-01)<br>paragraphs [0043]-[0049], fig. 9 | 4, 9 |
| Y | JP 09-189522 A (NIKON CORP) 22 July 1997 (1997-07-22)<br>paragraphs [0021]-[0052], fig. 1-3 | 5, 10 |
| A | JP 2010-243263 A (NIPPON STEEL CORP) 28 October 2010 (2010-10-28)<br>entire text, all drawings | 1-10 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/031600**

| Patent document cited in search report | | | Publication date (day/month/year) | Patent family member(s) | Publication date (day/month/year) |
|---|---|---|---|---|---|
| JP | 2004-109106 | A | 08 April 2004 | (Family: none) | |
| JP | 2021-071480 | A | 06 May 2021 | (Family: none) | |
| JP | 2006-138830 | A | 01 June 2006 | (Family: none) | |
| JP | 09-189522 | A | 22 July 1997 | (Family: none) | |
| JP | 2010-243263 | A | 28 October 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017187348 A
- JP 2010286244 A
- JP 2008051733 A
- JP H11201739 A